# EUROPEAN PATENT SPECIFICATION

(11) **EP 2 445 348 B1**
(45) Date of publication and mention of the grant of the patent: **20.08.2014**
(21) Application number: 10727687.5
(22) Date of filing: 22.06.2010
(51) Int. Cl.: A01N 43/653, A01N 63/04, A01P 3/00

(54) **COMBINATIONS OF FUNGICIDALLY ACTIVE YEAST AND FUNGICIDES**
KOMBINATIONEN FUGIZIDWIRKSAMER HEFE UND FUNGIZIDE
COMBINAISONS DE LEVURES FONGICIDES ET DE FONGICIDES

(30) Priority: 24.06.2009 EP 09163602
(43) Date of publication of application: 02.05.2012
(60) Divisional application: 13197397.6
(73) Proprietor: Bayer CropScience AG, 40789 Monheim (DE)
(72) Inventor: DAVIES , Peter , Howard, Muntinlupa City 1780 Manila (PH); EBBINGHAUS , Dirk, 42119 Wuppertal (DE); GÖRTZ , Andreas, 41470 Neuss (DE); CARBONNE , Stephane, 69480 Lucenay (FR)
(86) International application number: PCT/EP2010/003817
(87) International publication number: WO 2010/149369

(56) References cited:
- US-B2- 6 994 849

## Description

The present invention generally relates to methods for reducing overall damage of plants and plant parts as well as losses in harvested fruits or vegetables caused by plant pathogenic fungi or other unwanted micro-organisms. Particularly it relates to methods for protecting fruits and vegetables during the growth phase, around harvesting and after harvesting.

The yeast Metschnikowia fructicola, in particular the strain NRRL Y-30752, is known from US 6,994,849 B2. This yeast provides a good protection of plants and plant parts against plant pathogenic fungi. However, the performance of such yeast is still not fully satisfactory under conditions of severe disease pressure.

The foregoing and other aspects of the present invention are explained in detail in the detailed description and examples set forth below.

The preferred application rate of the biological control agent, in particular the yeast, very particular Metschnikowia fructicola strain NRRL Y-30752 is within the range of 0.5 to 8 Kg/ha.

According to still further features in the described preferred embodiments there is provided a composition comprising biologically pure mutant of Metschnikowia fructicola, having all of the identifying characteristics of the biologically pure culture of NRRL Y-30752.

According to still further features in the described preferred embodiments the deleterious microorganism is selected from the group consisting of /Botrytis cinerea, Aspergillus niger, Penicillium digitatum, Penicillium expansum, Rhizopus stolonifer Alternaria /spp., /Molinilia /spp. and /Fusarium /spp.

According to still further features in the described preferred embodiments the yeast is supplied in a physiologic state selected from the group consisting of active and dormant.

According to still further features in the described preferred embodiments the yeast of the genus /Metschnikowia /has all of the identifying characteristics of the species /Metschnikowia fructicola /identified as NRRL Y-30752 or of any strain thereof or of any mutant of such a strain.

Particularly preferred is the treatment of pome and stone fruit and berries, in particular apples, pears, plums, peaches, almonds, cherries, strawberries, raspberries and blackberries.

Particularly preferred is the treatment of citrus fruit, in particular orange, lemon, grapefruit, mandarin. Particularly preferred is the treatment of tropical fruit, in particular papaya, passion fruit, mango, carambola, pineapple, banana.

Particularly preferred is the treatment of grapevines.

Further preferred is the treatment of vegetables, in particular: Melons, Cucurbits, lettuce, potatoes

Further preferred is the treatment of flowers, bulbs, pot plants, trees

Besides the application of the compositions according to the invention on growing plants or plant parts, they can also be used to protect plants or plant parts after harvesting.

Within this application "post-harvest treatment" is to be understood in a very broad sense. On the one hand it means literally the treatment of fruit or vegetables after the fruit and vegetables have been harvested. For post-harvest treatment the fruit or vegetable is treated with (e.g. with using the method and apparatus disclosed in WO 2005/009474), dipped or tank dumped or drenched into a liquid, brushed with, fumigated, painted, fogged (warm or cold), or the fruit may be coated with a waxy or other composition.

According to the invention, post-harvest and storage diseases may be caused for example by the following fungi:

Colletotrichum spp., e.g. Colletotrichum musae, Colletotrichum gloeosporioides, Colletotrichum coccodes; Fusarium spp., e.g. Fusarium semitectum, Fusarium moniliforme, Fusarium solani, Fusarium oxysporum; Verticillium spp., e.g. Verticillium theobromae; Nigrospora spp.; Botrytis spp., e.g. Botrytis cinerea; Geotrichum spp., e.g. Geotrichum candidum; Phomopsis spp., Phomopsis natalensis; Diplodia spp., e.g. Diplodia citri; Alternaria spp., e.g. Alternaria citri, Alternaria alternata; Phytophthora spp., e.g. Phytophthora citrophthora, Phytophthora fragariae, Phytophthora cactorum, Phytophthora parasitica; Septoria spp., e.g. Septoria depressa; Mucor spp., e.g. Mucor piriformis; Monilinia spp., e.g. Monilinia fructigena, Monilinia laxa; Venturia spp., e.g. Venturia inaequalis, Venturia pyrina; Rhizopus spp., e.g. Rhizopus stolonifer, Rhizopus oryzae; Glomerella spp., e.g. Glomerella cingulata; Sclerotinia spp., e.g. Sclerotinia fruiticola; Ceratocystis spp., e.g. Ceratocystis paradoxa; Penicillium spp., e.g. Penicillium funiculosum, Penicillium expansum, Penicillium digitatum, Penicillium italicum; Gloeosporium spp., e.g. Gloeosporium album, Gloeosporium perennans, Gloeosporium fructigenum, Gloeosporium singulata; Phlyctaena spp., e.g. Phlyctaena vagabunda; Cylindrocarpon spp., e.g. Cylindrocarpon mali; Stemphyllium spp., e.g. Stemphyllium vesicarium; Phacydiopycnis spp., e.g. Phacydiopycnis malirum; Thielaviopsis spp., e.g. Thielaviopsis paradoxy; Aspergillus spp., e.g. Aspergillus niger, Aspergillus carbonarius; Nectria spp., e.g. Nectria galligena; Pezicula spp.

According to the invention, post-harvest storage disorders are for example scald, scorch, softening, senescent breakdown, lenticel spots, bitter pit, browning, water core, vascular breakdown, CO₂ injury, CO₂ deficiency and O₂ deficiency.

Fruit, cutflower and vegetables to be treated according to the invention are particularly selected from
cereals, e.g. wheat, barley, rye, oats, rice, sorghum and the like; beets, e.g. sugar beet and fodder beet; pome and stone fruit and berries, e.g. apples, pears, plums, peaches, almonds, cherries, strawberries, raspberries and blackberries; leguminous plants, e.g. beans, lentils, peas, soy beans; oleaginous plants, e.g. rape, mustard, poppy, olive, sunflower, coconut, castor-oil plant, cocoa, ground-nuts; cucurbitaceae, e.g. pumpkins, gherkins, melons, cucumbers, squashes; fibrous plants, e.g. cotton, flax, hemp, jute; citrus fruit, e.g. orange, lemon, grapefruit, mandarin; tropical fruit, e.g. papaya, passion fruit, mango, carambola, pineapple, banana; vegetables, e.g. spinach, lettuce, asparagus, brassicaceae such as cabbages and turnips, carrots, onions, tomatoes, potatoes, hot and sweet peppers; laurel-like plants, e.g. avocado, cinnamon, camphor tree; or plants such as maize, tobacco, nuts, coffee, sugar-cane, tea, grapevines, hops, rubber plants, as well as ornamental plants, e.g. cutflowers, roses, gerbera and flower bulbs, shrubs, deciduous trees and evergreen trees such as conifers. This enumeration of culture plants is given with the purpose of illustrating the invention and not to delimiting it thereto.

In another preferred embodiment of the invention, the treatment of plants or plant parts is carried out in two steps:
a) with a chemical fungicide, and
b) with a yeast,
wherein the time interval between the two applications a) and b) is defined as follows:

| **Crop** | **Application time of chemical fungicide** | **Application time of yeast** |
|---|---|---|
| stone fruit and strawberries | 60 to 7 days before harvest | 14 to 1 day before harvest |
| Pome | 100 - 14 days before harvest | 14 - 1 day before harvest |

In all cases the chemical fungicide would be applied at a plant growth stage (BBCH) of 50 - 85 and the yeast would be applied at plant growth stage (BBCH) of 80 onward including post harvest.

The chemical fungicides for carrying out step a) of this embodiment is fluopyram or tebuconazole.

Further, the chemical fungicide in step a) is preferably selected from mixtures comprising two, of the following chemical fungicides.

Tebuconazole, fluopyram.

The yeast of step b) is Metschnikowia fructicola, of the strain Metschnikowia fructicola NRRL Y-30752.

Most preferably, step a) is carried out with fluopyram or tebuconazole and step b) is carried out with Metschnikowia fructicola NRRL Y-30752.

BBCH refers to the growth stage of the plant and is described in: "Growth stages of mono-and dicotyledonous plants", BBCH Monograph, 2nd Edition, 2001, Uwe Meier Ed., Federal Biological Research Centre for Agriculture and Forestry

Surprisingly, this method achieves a very high level of control of plants or plant parts against unwanted microorganisms. In comparison to treatments of the state of the art, which either use only chemical fungicides or only biological fungicides, this methods combines a high level of control of unwanted microorganisms with very low levels of residues of the chemical fungicides on the treated plants or plant parts.

The present invention also provides methods of treating a plant by application of any of a variety of customary formulations in an effective amount to either the soil (i.e., in-furrow), a portion of the plant (i.e., drench) or on the seed before planting (i.e., seed coating or dressing). Customary formulations include solutions (SL), emulsifiable concentrate (EC), wettable powders (WP), suspension concentrate (SC and FS), wettable powder (WP), soluble powders (SP), granules (GR), suspension-emulsion concentrate (SE), natural and synthetic materials impregnated with active compound, and very fine control release (CR) capsules in polymeric substances.

The surprising activity of the methods are illustrated by the following example.

### Example 1

Shemer™ is a commercial product containing the yeast Metschnikowia fructicola NRRL Y-30752 in a 56% WG (wettable granule) formulation. This preparation has a minimum content of Metschnikowia fructicola NRRL Y-30752 of 1.6x10¹⁰ cfu/g (cfu/ g = colony forming units per gram product).

Applications were made onto peach trees in Italy and France in July and August 2008. A composition containing tebuconazole and fluopyram 200 + 200g SC (Suspension Concentrate) was applied on three occasions at approximately 7 days intervals, BBCH81 - 85, with a Pre Harvest Interval (PHI) of 7 days. Shemer™ was applied on 4 occasions BBCH 81-87 with a PHI of 1 day. In a third treatment program, two applications of tebuconazole and fluopyram, BBCH 81 were followed by two applications of Shemer BBCH 85 and BBCH 87 all at 7 day intervals with a PHI of 1 day for the final Shemer™ application.
All products were applied by motor driven sprayers in a water volume of 400 L / ha. Tebuconazole and fluopyram was applied at 150 + 150 g ai / ha. Shemer™ was applied at 0.2 % which is equivalent to 0.8 kg/ha. Shemer has a minimum amount of active ingredient of 1.6x10¹⁰ cfu/g, therefore a minimum of 1.3 x 10¹³ cfu were applied per ha.
Assessments were carried out on fruit to determine the number of fruit infected with *Monilinia fructigena,* from a sample of 200 fruit, the result was converted to % infection per treatment and compared with an untreated plot to determine % control.

Assessments were made 9 and 13 days after final application. Shemer™ gave an average of 28% control of disease. Tebuconazole + fluopyram gave 75% control. The programme of two applications of Tebuconazole + fluopyram followed by two applications of Shemer gave 89% control.

## Claims

1. Method for protection of plants or plant parts against unwanted microorganisms, comprising the steps:
a) treatment of the plant or plant part with a chemical fungicide, and
b) treatment of the plant or plant part with a yeast,
wherein step a) is conducted 60 to 7 days before harvest for stone fruit and strawberries or 100 to 14 days before harvest for pome; and step b) is conducted 14 to 1 day before harvest.
and wherein, the chemical fungicide in step a) is selected from; Tebuconazole, fluopyram,
and wherein the treatment in step b) comprises a biologically pure culture of Metschnikowia fructicola strain NRRL Y-30752 or e mutant thereof.

2. Method according to claim in which the chemical fungicide in step a) is a mixture of tebuconazole and fluopyram.

## Patentansprüche

1. Verfahren zum Schützen von Pflanzen oder Pflanzenteilen gegen unerwünschte Mikroorganismen, welches die folgenden Schritte umfasst:
a) Behandeln der Pflanze bzw. der Pflanzenteile mit einem chemischen Fungizid und
b) Behandeln der Pflanze bzw. der Pflanzenteile mit einer Hefe,
wobei Schritt a) bei Steinfrüchten und Erdbeeren 60 bis 7 Tage vor der Ernte durchgeführt wird oder bei Kernfrüchten 100 bis 14 Tage vor der Ernte durchgeführt wird und Schritt b) 14 bis 1 Tag vor der Ernte durchgeführt wird,
und wobei das chemische Fungizid in Schritt a) ausgewählt ist aus: Tebuconazol und Fluopyram,
und wobei die Behandlung in Schritt b) eine biologisch reine Kultur des Metschnikowia-fructicola-Stamms NRRL Y-30752 oder eine Mutante davon umfasst.

2. Verfahren nach Anspruch 1, wobei es sich bei dem chemischen Fungizid in Schritt a) um eine Mischung aus Tebuconazol und Fluopyram handelt.

## Revendications

1. Méthode de protection de plantes ou de parties de plantes contre des microorganismes indésirables, comprenant les étapes :
a) de traitement de la plante ou de la partie de plante par un fongicide chimique, et
b) de traitement de la plante ou de la partie de plante par une levure,
où l'étape a) est réalisée de 60 à 7 jours avant récolte pour les fruits à noyau et les fraises ou de 100 à 14 jours avant récolte pour les fruits à pépins ; et l'étape b) est réalisée de 14 à 1 jours avant récolte,
et où le fongicide chimique dans l'étape a) est choisi parmi le tébuconazole et le fluopyram,
et où le traitement dans l'étape b) comprend une culture biologiquement pure de la souche NRRL Y-30752 de *Metschnikowia fructicola* ou un mutant de celle-ci.

2. Méthode selon la revendication 1, dans laquelle le fongicide chimique dans l'étape a) est un mélange de tébuconazole et de fluopyram.
